# EUROPÄISCHE PATENTSCHRIFT

(11) **EP 3 424 371 B1**
(45) Veröffentlichungstag und Bekanntmachung des Hinweises auf die Patenterteilung: **07.09.2022**
(21) Anmeldenummer: 18182107.5
(22) Anmeldetag: 06.07.2018
(51) Int. Cl.: A47G 29/14, B64C 39/02, B64F 1/32, B65G 11/12

(54) **AUFNAHMEBEHÄLTER UND VERFAHREN ZUM VORHALTEN EINER MITTELS EINER UNBEMANNTEN FLUGFÄHIGEN TRANSPORTEINRICHTUNG ÜBERBRACHTEN SENDUNG**
RECEPTACLE AND METHOD FOR HOLDING A CONSIGNMENT DELIVERED BY AN UNMANNED AERIAL VEHICLE
RÉCIPIENT DE RÉCEPTION ET PROCÉDÉ DE MISE À DISPOSITION D'UNE EXPÉDITION LIVRÉE PAR VEHICULE AÉRIEN SANS PILOTE

(30) Priorität: 06.07.2017 DE 102017115159
(43) Veröffentlichungstag der Anmeldung: 09.01.2019
(73) Patentinhaber: Deutsche Post AG, 53113 Bonn (DE)
(72) Erfinder: von Gostomski, Markus, 53127 Bonn (DE); Markert, Florian, 53227 Bonn (DE)
(74) Vertreter: Michalski Hüttermann & Partner Patentanwälte mbB

(56) Entgegenhaltungen:
- WO-A1-2017/058924
- DE-A1-102007 014 239
- DE-A1-102014 206 534
- DE-U1- 9 300 126
- US-B1- 9 387 928

## Beschreibung

### Technisches Gebiet

Die Erfindung betrifft einen Aufnahmebehälter zum Vorhalten einer mittels einer unbemannten flugfähigen Transporteinrichtung an den Aufnahmebehälter überbrachten Sendung. Die Erfindung betrifft zudem ein Verfahren zum Vorhalten der mittels der unbemannten flugfähigen Transporteinrichtung an den Aufnahmebehälter überbrachten Sendung.

### Hintergrund der Erfindung

Infolge steigenden Güterverkehrs durch Stück- und Sammelgutfahrten, LKW- oder Containertransporte, See- oder Luftfrachtpakettransporte im Rahmen von E-Commerce und Online-Versandhandelsangeboten hat sich die Anzahl an Transportgütern und insbesondere von Paketsendungen und Sendungen signifikant erhöht. Zwar ist es heutzutage möglich, eine Bestellung unabhängig von herkömmlichen Ladenöffnungszeiten Online zu tätigen, jedoch erfolgt die Lieferung der Sendung an den Empfänger fast ausschließlich mittels klassischer Zustellverfahren, beispielsweise durch Briefträger oder im Falle von Paketsendungen durch motorisierte Zustellfahrzeuge und im Wesentlichen nur innerhalb der Ladenöffnungszeiten. Ist der Empfänger bei der Lieferung nicht anzutreffen, beispielsweise weil er als Beruftätiger innerhalb der Ladenöffnungszeiten seiner Arbeit nachgeht, wird entweder versucht, die Sendung ein weiteres Mal zuzustellen oder die Sendung wird in einer Filiale des Zustellunternehmens zur Abholung durch den Empfänger hinterlegt. Zwar besteht seit einiger Zeit die Möglichkeit, Sendungen an einem Sammelpunkt zu hinterlegen, beispielsweise in einer DHL-Packstation, allerdings sind derartige Sammelpunkte noch nicht flächendeckend verfügbar und somit nicht in jedem Fall eine Alternative.

In jüngster Zeit sind daher Versuche unternommen worden, Sendungen mittels unbemannter flugfähiger Transporteinrichtungen, beispielsweise mit einem unbemannten Fluggerät, auch Paketkopter oder Drohne genannt, an den Empfänger oder den Sammelpunkt zu liefern. Bei diesen Versuchen wird regelmäßig ein Aufnahmebehälter zum Aufnehmen und Vorhalten der Sendung verwendet, an den die Transporteinrichtung die Sendung überbringen bzw. von dem die Transporteinrichtung die Sendung abholen kann. Nachdem die Sendung durch die Transporteinrichtung an den Aufnahmebehälter überbracht worden ist, welcher beispielsweise im Vorgarten oder auf einem Dach eines Hauses des Empfängers aufgestellt ist oder für einen Stadtbezirk für eine Mehrzahl der Empfänger vorgesehen ist, kann die Sendung auch außerhalb der Ladenöffnungszeiten dem Aufnahmebehälter entnommen werden.

Bei den vorgenannten Versuchen hat sich die eigentliche Übergabe der Sendung von der Transporteinrichtung an den Aufnahmebehälter als besonders schwierig erwiesen. Beispielsweise ist ein "Abwerfen" der Sendung von der Transporteinrichtung an den Aufnahmebehälter nicht möglich, um zerbrechliche Sendungen nicht zu beschädigen.

WO 2017/058924 A1 beschreibt eine Dropbox-Vorrichtung, die einen definierten Hohlraum aufweist, in dem Verpackungen aufbewahrt werden können. Eine Abgabeöffnung ist derart angeordnet, um mindestens ein Paket von einem unbemannten Fahrzeug aufzunehmen, und eine Aufnahmeöffnung ist derart angeordnet, um einem Empfänger Zugang zu dem Paket zu verschaffen.

US 9 387 928 B1 beschreibt ein System und ein Verfahren zum Bereitstellen einer Reihe von Mehrzweck-UAV-Dockingstationen. Die Dockingstationen können mit einer zentralen Steuerung und mehreren UAVs vernetzt werden. Die Docking-Stationen können Pakethandhabungseinrichtungen enthalten und als Endziel oder als Zustellknotenpunkt fungieren.

DE 10 2014 206 534 betrifft eine Fülleinrichtung zum Befüllen eines Behältnisses mit insbesondere bruchempfindlichen Gütern, umfassend eine Fördervorrichtung, eine Rutsche mit einer Rutschrichtung, wobei die Rutsche in einem ersten vorbestimmten Winkel zur horizontalen Ebene geneigt ist, und eine Aufnahmevorrichtung mit wenigstens einer Aufnahme, welche das Behältnis aufnimmt, wobei die Aufnahme in einem zweiten vorbestimmten Winkel zur horizontalen Ebene geneigt ist, wobei ein Anfang der Rutsche an einem Ende der Fördervorrichtung angeordnet ist, wobei die Fördervorrichtung die Güter zur Rutsche fördert, und wobei das Behältnis mit den Gütern über die Rutsche befüllbar ist.

DE 93 00 126 U1 betrifft eine für eine Kommissionieranlage vorgesehene Endstelleneinrichtung, die zum Manipulieren bzw. Kommissionieren von Gegenständen einen zu einer Sortiereinrichtung zugeordneten ersten Transportabschnitt und einen an den ersten Transportabschnitt anschließenden zweiten Transportabschnitt aufweist, die gegen die Horizontale schräg nach unten geneigt sind.

### Beschreibung der Erfindung

Ausgehend von dieser Situation ist es eine Aufgabe der vorliegenden Erfindung, eine Sendung in sicherer Weise zwischen einer unbemannten flugfähigen Transporteinrichtung an einen Aufnahmebehälter zu übergeben, so dass die Sendung in einfacher Weise in einen Verfügungsbereich eines Empfängers der Sendung gelangen kann.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe durch einen Aufnahmebehälter zum Vorhalten einer mittels einer unbemannten flugfähigen Transporteinrichtung an den Aufnahmebehälter überbrachten Sendung gelöst, mit einer sich zwischen einem Rutschenanfang und einem Rutschenende erstreckenden Rutsche und einer Mehrzahl im Bereich des Rutschenendes vorgesehene Aufnahmefächer zum Aufnehmen wenigstens einer Sendung, wobei die Rutsche um die Vertikale drehbar, um die Horizontale verschwenkbar und/oder zwischen dem Rutschenanfang und dem Rutschenende längenveränderbar ausgeführt ist, um eine von der Transporteinrichtung an dem Rutschenanfang erhaltene Sendung an dem Rutschenende in eines der Aufnahmefächer einzuliefern.

Ein wesentlicher Punkt der Erfindung liegt in der Rutsche, die vorzugsweise innerhalb des Aufnahmebehälters angeordnet ist, so dass in besonders einfacher Weise eine von der unbemannten flugfähigen Transporteinrichtung an den Aufnahmebehälter überbrachte Sendung mittels der Schwerkraft in eines der mehreren Aufnahmefächer einlieferbar ist. Da die Rutsche um die Vertikale drehbar, um die Horizontale verschwenkbar und/oder zwischen ihrem Rutschenanfang und ihrem Rutschenende längenveränderbar ausgestaltet ist, lässt sich die Sendung in flexibler Weise in unterschiedliche und insbesondere in Abhängigkeit der Sendung in ein vorbestimmtes Aufnahmefach einliefern.

Während durch Drehen der Rutsche um die Vertikale nebeneinander angeordnete Aufnahmefächer erreichbar sind, können durch Verschwenken der Rutsche um die Horizontale übereinander angeordnete Aufnahmefächer erreicht werden, gegebenenfalls durch Veränderung der Länge der Rutsche. Die Rutsche ist bevorzugt an ihrem Rutschenende an dem Aufnahmebehälter um die Vertikale drehbar und/oder um die Horizontale verschwenkbar gelagert, beispielsweise mittels eines Drehgelenks. Zum Drehen, Verschwenken und/oder Längenverändern der Rutsche ist bevorzugt eine elektromechanische Einrichtung vorgesehen, mittels derer die Rutsche derart drehbar, verschwenkbar und/oder längenveränderbar ist, dass die von der Transporteinrichtung erhaltene Sendung in ein vorbestimmtes Aufnahmefach einlieferbar ist.

Die Rutsche, oftmals auch Rutschbahn genannt, kann dazu beliebig beispielsweise als schiefe Ebene aus einem glatten Material ausgestaltet sein, so dass sich die Sendung aufgrund geringer Reibung und mittels der Schwerkraft insbesondere ohne weiteren Kraftaufwand von allein in Richtung Rutschenende und weiter in eines der Aufnahmefächer bewegen kann. Bevorzugt weist die Rutsche an ihren Rändern zwischen Rutschenanfang und Rutschenende Führungseinrichtungen beispielsweise in Form von seitlichen Borden zum Führen der Sendung auf, so dass die Sendung während des Rutschens nicht von der Rutsche herunterfallen kann. Die Rutsche ist bevorzugt als Paketrutsche ausgeführt und erstreckt sich linear zwischen ihrem Rutschenanfang und ihrem Rutschenende, wobei ebenso auch weitere Ausgestaltungen denkbar sind. Bevorzugt ist die Rutsche als Kastenrutsche mit geradem Boden und zwei aufrechten Seitenwangen, als Halbschalenrutsche mit offener Mulde oder als Tunnelrutsche mit geschlossener Röhre ausgestaltet.

Die Aufnahmefächer sind bevorzugt mit einem quadratischen Schnitt und/oder im sogenannten PKA-Format ausgeführt. Der Begriff "im Bereich des Rutschenendes" meint insbesondere, dass das Rutschenende derart benachbart zu dem Aufnahmefach insbesondere durch Veränderung der Länge der Rutsche anordenbar ist, dass eine die Rutsche herunterrutschende Sendung allein durch die Schwerkraft bedingt von dem Rutschenende in das Aufnahmefach herein gelangen kann.

Die Transporteinrichtung ist bevorzugt als Fluggerät, als unbemanntes Luftfahrzeug, Englisch als "unmanned, uninhabited oder unpiloted aerial vehicle", abgekürzt UAV, als Paketkopter oder als Drohne ausgestaltet. Mögliche Ausprägungsformen der Transporteinrichtung können Helikopter, Multikopter, Quadrokopter oder Tiltwing sein, um nur einige Möglichkeiten aufzuzählen. Bevorzugt weisen die Transporteinrichtung und/oder der Aufnahmebehälter mechanische und/oder informationstechnologische Einrichtungen auf, die die Transporteinrichtung und/oder den Aufnahmebehälter zum Ausführen eines nachfolgend beschriebenen Verfahrens befähigen, insbesondere zum automatischen und/oder autonomen Ausführen des Verfahrens. Die Transporteinrichtung und/oder der Aufnahmebehälter kann ein Mikroprozessor, eine Steuerungseinrichtung und/oder eine speicherprogrammierbare Steuerung aufweisen, die mit einem Softwareprogramm zum Ausführen der Verfahrensschritte und/oder über Kommunikationseinrichtungen zur drahtgebundenen und/oder drahtlosen Kommunikation zwischen der Transporteinrichtung und dem Aufnahmebehälter verfügen.

An der Transporteinrichtung kann ein Nutzlastbehälter zum Transportieren der Sendung vorgesehen sein, der sich, im Bereich und/oder oberhalb des Rutschenendes öffnen lässt, damit die Sendung an dem Rutschenanfang auf die Rutsche gelangen kann. Die Sendung ist beispielsweise eine Postsendung, ein Paket, ein Einschreiben, ein Brief oder ein sonstiges transportables Gut. Der Aufnahmebehälter kann als Briefkasten, Paketkasten, Paketbriefkasten, Packstation und/oder sogenannter Skyport zum Vorsehen in einem Garten oder auf einem Dach eines Gehäuses ausgeführt sein. Nach dem Einliefern der Sendung verbleibt diese bevorzugt in dem Aufhahmefach, beispielsweise bis dass ein Empfänger der Sendung diese aus dem Aufnahmefach entnimmt. Im Falle eines Gebäudes erstreckt sich die Vertikale bevorzugt in Richtung der Normalen des Dachs bzw. des Gartens des Gebäudes und die Horizontale entsprechend senkrecht dazu.

Nach einer bevorzugten Weiterbildung ist die Rutsche um die Vertikale drehbar und um die Horizontale verschwenkbar ausgestaltet, ist die Rutsche um die Horizontale verschwenkbar und längenveränderbar ausgestaltet, ist die Rutsche um die Vertikale verdrehbar und längenveränderbar ausgestaltet oder ist die Rutsche um die Vertikale drehbar, um die Horizontale verschwenkbar und längenveränderbar ausgestaltet. Derart lassen sich Sendungen in unterschiedliche nebeneinander, übereinander sowie umlaufend um die Rutsche herum angeordnete Aufnahmefächer einliefern. Die vorbeschriebene Steuerung kann die Rutsche derart drehen, verschwenken und/oder längenverändern, dass die Sendung entsprechend ihrer Dimensionen, Maße, Schnitte, Volumina und/oder anhand einer Vorbestimmung in ein korrespondierendes und/oder vorbestimmtes Aufnahmefach eingeliefert wird.

Entsprechend ist nach der Erfindung vorgesehen, dass die Aufnahmefächer umlaufend, insbesondere auf wenigstens zwei Ebenen übereinander und/oder nebeneinander, um die Rutsche herum vorgesehen sind. Beispielsweise können 16, 64 oder 256 Aufnahmefächer vorgesehen sein, die in mehreren Ebenen, nebeneinander und umlaufend um die Rutsche herum, innerhalb des Aufnahmebehälters vorgesehen sind. Darüber hinaus existieren weitere Varianten, um entsprechend vorhandener Gegebenheiten an einem Installationsort des Aufnahmebehälters möglichst viele Aufnahmefächer vorzusehen. Grundsätzlich können alle Aufnahmefächer die gleichen Dimensionen, Maße, Schnitte und/oder Volumina aufweisen, wobei jedoch ebenso Aufnahmefächer entsprechend unterschiedlicher Sendungsgrößen unterschiedliche Dimensionen, Maße, Schnitte und/oder Volumina aufweisen können.

Nach einer bevorzugten Weiterbildung weist jedes Aufnahmefach eine verschließbare Entnahmeöffnung auf, durch welche die Sendung hindurch aus dem Aufnahmefach entnehmbar ist, und/oder weist jedes Aufnahmefach eine der Rutsche zugewandte verschließbare Ladeöffnung auf. Zum Verschließen der jeweiligen Öffnung kann eine Tür oder ein Rolltor vorgesehen sein. Die Entnahmeöffnung ist bevorzugt der Rutsche abgewandt und/oder entgegengesetzt zu der Ladeöffnung angeordnet, so dass ein Empfänger der Sendung diese nach Öffnen der Entladeöffnung aus dem Aufnahmefach entnehmen und/oder einstellen kann.

Mittels der vorbeschriebenen Steuerung lässt sich ein Öffnen der Ladeöffnung vor Einliefern der Sendung veranlassen und nach dem Einliefern ein Verschließen veranlassen, damit die Sendung gegen Umgebungseinflüsse und/oder Entnahme durch Nichtberechtigte geschützt ist. Zum Öffnen der Entnahmeöffnung kann an dem Aufnahmebehälter ein Schlüsselschalter in mechanischer oder elektronischer Ausführung vorgesehen sein. Im Falle eines elektronischen Schlüsselschalters kann das Öffnen beispielsweise durch eine auf einem Smartphone des Empfängers vorgesehene App und/oder eine Nahfeldkommunikationsverbindung wie beispielsweise NFC erfolgen, die mit dem Aufnahmebehälter in Kommunikationsverbindung steht. Die in dem Aufnahmebehälter vorgesehene Steuerung ist bevorzugt ausgestaltet, beispielsweise über eine drahtlose Kommunikationsverbindung nach einem Mobilfunkprotokoll oder ein lokales Netzwerk mit dem Smartphone des Empfängers zu kommunizieren.

Grundsätzlich kann das Einliefern der Sendung wie zuvor beschrieben direkt von dem Rutschenende in das Aufnahmefach erfolgen. Nach einer bevorzugten Weiterbildung weist jedes Aufnahmefach eine Positionierhilfe zum Einliefern der Sendung in das Aufnahmefach und/oder zum Unterstützen des Rutschenendes auf. Die Positionierhilfe ist bevorzugt als Positionierblech, insbesondere als geneigtes Blech ausgestaltet und, von der Rutsche ausgesehen, vor der Ladeöffnung an dem Aufnahmefach angeordnet. Die Positionierhilfe ist insbesondere starr mit dem Aufnahmefach verbunden und kann sicherstellen, dass die Sendung vollständig und ohne weitere Zutun in das Aufnahmefach hinein gelangen kann.

Gemäß der Erfindung, ist eine oberhalb des Rutschenanfangs vorgesehene Landeplattform für die Transporteinrichtung und ein zwischen der Landeplattform und dem Rutschenanfang angeordneter Trichter vorgesehen. Die Landeplattform und/oder der Trichter sind bevorzugt in Richtung der Vertikalen oberhalb der Rutsche und/oder des Rutschenanfangs angeordnet. Die Landeplattform kann einen Durchmesser von 1 m, 2 m, 3 m oder mehr aufweisen, wobei eine Längs- und/oder Querführung vorgesehen sein kann, um die auf der Landeplattform gelandete Transporteinrichtung mittig über dem Trichter zu positionieren. In dieser Position kann die Sendung von der Transporteinrichtung gelöst werden und durch den Trichter hindurch an dem Rutschenanfang auf die Rutsche gelangen, um nach Herunterrutschen auf der Rutsche das Aufnahmefach zu erreichen.

Wie zuvor beschrieben existieren zur körperlichen Ausgestaltung des Aufnahmebehälters grundsätzlich verschiedene Möglichkeiten. Nach der Erfindung weist der Aufnahmebehälter ein öffenbares Dach auf, welche oberhalb der Rutsche und der Aufnahmefächer vorgesehen ist. Das Dach ist durch eine umlaufende Umwehrung begrenzt, so dass bei geschlossenem Dach und begrenzt durch die Umwehrung sowie die Aufnahmefächer die Rutsche vollständig innerhalb des Aufnahmebehälters und damit geschützt vor möglicherweise schädlichen Umwelteinflüssen vorgesehen ist. Das Dach kann beispielsweise klappbar ausgestaltet an der Umwehrung angelenkt sein.

Um zu unterbinden, dass sich ein Unberechtigter der gelandeten oder sich im Anflug befindlichen Transportvorrichtung nähert, kann eine Zutrittsbeschränkungseinrichtung, insbesondere in elektronischer Form vorgesehen sein, mittels derer ein Betreten des Dachs und/oder eines Gebäudedaches, auf dem der Aufnahmebehälter installiert ist, verhinderbar ist. Die genannte Zutrittsbeschränkung kann einerseits einen Zutritt auf das Dach des Aufnahmebehälters verhindern sowie andererseits bei auf einem Dach eines Gebäudes installiertem Aufnahmebehälter den Zutritt zu dem Dach des Gebäudes verhindern. Eine solche Zutrittsbeschränkung kann als Drehkreuz, als Schranke oder dergleichen ausgestaltet sein.

Um zu prüfen, ob ein Aufnahmefach bereits durch eine Sendung belegt ist, insbesondere ob bereits eine Sendung in ein Aufnahmefach eingeliefert oder durch einen Empfänger der Sendung aus dem Aufnahmefach entnommen worden ist, ist in vorteiliger Weiterbildung ein Belegungssensor vorgesehen, der beispielsweise als Lastsensor oder dergleichen ausgeführt ist. Bevorzugt ist jedes einzelne Aufnahmefach mit einem derartigen Lastsensor versehen.

Nach einer anderen bevorzugten Weiterbildung weist der Aufnahmebehälter eine Übergabeeinrichtung auf, welche insbesondere ausgestaltet ist, um aus dem Aufnahmefach eine Sendung an eine an dem Aufnahmebehälter gelandete Transporteinrichtung zu übergeben. Ebenso kann die Übergabeeinrichtung ausgestaltet sein, eine Sendung einer an dem Aufnahmebehälter gelandeten Transporteinrichtung aus dieser zu entnehmen und auf dem Rutschenanfang abzulegen. Die Übergabeeinrichtung kann nach Art eines Kranarms oder dergleichen ausgeführt sein und ist bevorzugt innerhalb des Aufnahmebehälters im Bereich der Rutsche angeordnet.

Die Aufgabe der Erfindung wird weiterhin durch ein Verfahren nach Anspruch 9 gelöst.

Das vorgeschlagene Verfahren ermöglicht in besonders einfacher und sicherer Weise eine Sendung von einer insbesondere auf dem Aufnahmebehälter gelandeten Transporteinrichtung in ein vorbestimmtes Aufnahmefach des Aufnahmebehälters einzuliefern. Ein Empfänger der Sendung kann diese dann in einem weiteren Schritt aus dem Aufnahmefach entnehmen. Durch die drehbare, verschwenkbare und/oder längenveränderbare Rutsche lässt sich die Sendung in eines der mehreren Aufnahmefächer einliefern. Zum Verlängern der Rutsche weist diese beispielsweise einen Teleskoparm auf, so dass ein Rutschweg zwischen Rutschenanfang und Rutschenende verlängerbar und/oder verkürzbar ist.

Nach einer bevorzugten Weiterbildung weist das Verfahren den Schritt Mitteilen eines Landeanflugs der Transporteinrichtung an den Aufnahmebehälter auf, Prüfen, ob der Aufnahmebehälter über ein freies Aufnahmefach zum Einliefern der Sendung verfügt, Öffnen eines Dachs des Aufnahmebehälters zum Landen der Transporteinrichtung an dem Aufnahmebehälter und/oder Öffnen einer Ladeöffnung des vorbestimmten Aufnahmefachs und/oder Positionieren des Rutschenendes vor dem vorbestimmten Aufnahmefach. Eine sich dem Aufnahmebehälter nähernde Transporteinrichtung kann ihre Position und/oder die designierte Landung beispielsweise mittels eines Mobilfunkprotokolls wie beispielsweise LTE oder durch Verbinden mit einem drahtlosen Netzwerk des Aufnahmebehälters diesem mitteilen. Sofern der Aufnahmebehälter über kein freies Aufnahmefach verfügt, kann eine Mitteilung von dem Aufnahmebehälter an die Transporteinrichtung erfolgen, so dass die Transporteinrichtung den Landeanflug unterbricht und zu einem späteren Zeitpunkt versucht, die Sendung erneut an den Aufnahmebehälter einzuliefern.

Sofern der Aufnahmebehälter über ein freies Aufnahmefach verfügt, welches insbesondere hinsichtlich Größe und/oder Volumens zum Aufnehmen der Sendung geeignet ist, lässt sich das Dach des Aufnahmebehälters öffnen, so dass die Transporteinrichtung an dem Aufnahmebehälter landen kann. Nachdem eine Ladeöffnung des vorbestimmten oder durch eine Steuerung des Aufnahmebehälters ausgewählten Aufnahmefachs geöffnet ist, lässt sich, nachdem das Rutschenende vor dem vorbestimmten Aufnahmefach durch Drehen, Verschwenken und/oder Längenverändern der Rutsche positioniert ist, die Sendung von der Transporteinrichtung über die Rutsche in das Aufnahmefach einliefern, beispielsweise durch Lösen der Sendung von der Transporteinrichtung, so dass die Sendung die Rutsche herunter in das Aufnahmefach hineingleitet.

Nach einer anderen bevorzugten Weiterbildung umfasst das Verfahren den Schritt Erfassen einer Gewichtsänderung des vorbestimmten Aufnahmefachs, insbesondere nach Einliefern der Sendung, Mitteilen des Einliefern an einen Empfänger der Sendung, und/oder Prüfen, ob sich die Transporteinrichtung nach dem Einliefern der Sendung von dem Aufnahmebehälter entfernt hat und bejahendenfalls Schließen eines Dachs des Aufnahmebehälters. Durch das Erfassen der Gewichtsänderung beispielsweise mittels eines Lastsensors lässt sich feststellen, ob die Einlieferung der Sendung erfolgt, das Aufnahmefach belegt ist und/oder ein Gewicht der Sendung feststellen. Das Mitteilen des Einlieferns an den Empfänger der Sendung erfolgt bevorzugt mittels einer elektronischen Nachricht von dem Aufnahmebehälter beispielsweise an ein Smartphone des Empfängers. Der Empfänger kann daraufhin zu dem Aufnahmebehälter gehen, um die Sendung, gegebenenfalls nach einer Autorisierung gegenüber dem Aufnahmebehälter, aus dem vorbestimmten Aufnahmefach zu entnehmen. Das Entnehmen der Sendung bewirkt eine Gewichtsänderung des Aufnahmefachs, welches daraufhin zum Einliefern einer anderen Sendung verfügbar ist.

Nach einer noch anderen bevorzugten Weiterbildung umfasst das Verfahren den Schritt Prüfen, ob für einen Empfänger eine Sendung in das Aufnahmefach eingeliefert ist, bejahendenfalls, Gewähren eines Zugangs für den Empfänger in einem örtlichen Umgebungsbereich des Aufnahmebehälters, und Öffnen einer Entnahmeöffnung des Aufnahmefachs. Beispielsweise kann der Aufnahmebehälter auf einem Dach eines Gebäudes vorgesehen sein, an dessen Zugangstür sich der Empfänger zum Betreten des Daches authentisieren kann. Nach erfolgter Prüfung, insbesondere wenn für den Empfänger eine Sendung in einem Aufnahmefach eingeliefert ist, kann dem Empfänger Zugang zum Dach gewährt, beispielsweise mittels eines Drehkreuzes, und eine Entnahmeöffnung des betreffenden Aufnahmefachs geöffnet werden. Durch das Drehkreuz lässt sich sicherstellen, dass immer nur ein Empfänger zur gleichen Zeit auf dem Dach als örtlichen Umgebungsbereich des Aufnahmebehälters zugegen ist.

Weitere Ausführungsformen und Vorteile des Verfahrens ergeben sich für den Fachmann in Analogie zum zuvor beschriebenen Aufnahmebehälter.

### Kurze Beschreibung der Zeichnungen

Nachfolgend wird die Erfindung unter Bezugnahme auf die anliegenden Zeichnungen anhand eines bevorzugten Ausführungsbeispiels näher erläutert.

In den Zeichnungen zeigen
- Fig. 1: eine schematische Ansicht eines Aufnahmebehälters zum Durchführen eines Verfahrens gemäß einem bevorzugten Ausführungsbeispiel der Erfindung in einer schematischen Seitansicht, und
- Fig. 2: der Aufnahmebehälter gemäß Fig. 1 in einer schematischen Draufsicht.

### Detaillierte Beschreibung des Ausführungsbeispiels

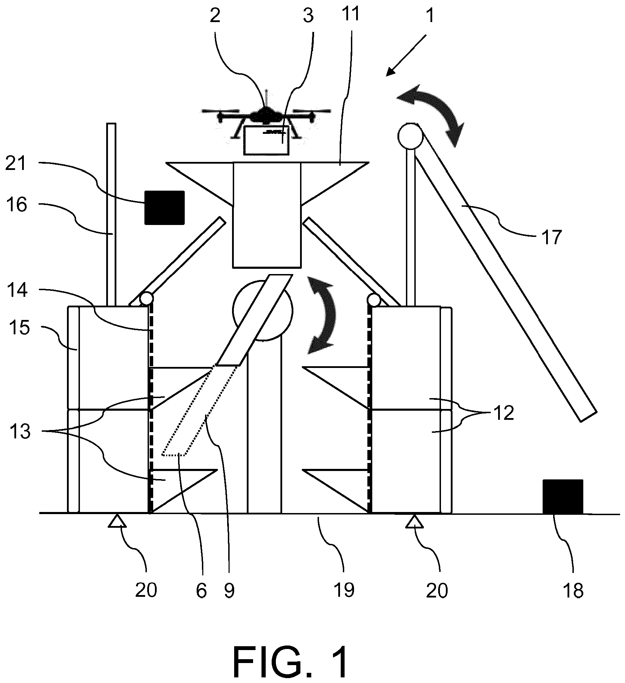

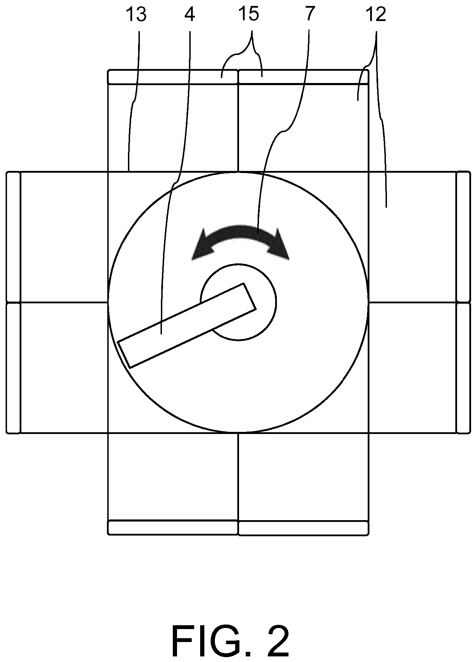

Fig. 1 zeigt einen Aufnahmebehälter 1 zum Vorhalten eines mittels einer unbemannten flugfähigen Transporteinrichtung 2 an den Aufnahmebehälter 1 überbrachten Sendung 3 zum Durchführen eines entsprechenden Verfahrens gemäß einem bevorzugten Ausführungsbeispiel in einer schematischen Seitansicht und in Fig. 2 in einer schematischen Draufsicht.

Der Aufnahmebehälter 1 weist eine Rutsche 4 auf, welche sich nach Art einer Kastenrutsche zwischen ihrem Rutschenanfang 5 und ihrem Rutschenende 6 linear erstreckt. Die Rutsche 4 ist an ihrem Rutschenanfang 5 an dem Aufnahmebehälter 1 um die Vertikale drehbar, angedeutet in Fig. 2 durch Pfeil 7, um die Horizontale verschwenkbar, angedeutet in Fig. 1 durch Pfeil 8, sowie zwischen ihrem Rutschenanfang 5 und ihrem Rutschenende 6 längenveränderbar mittels eines Teleskoparms 9 ausgestaltet.

Oberhalb des Rutschenendes 6 ist in dem Aufnahmebehälter 1 ein Trichter 10 angeordnet, an dessen Oberseite eine Landeplattform 11 ausgebildet ist, auf der die Transporteinrichtung 2 an dem Aufnahmebehälter 1 landen kann, wie auch in Fig. 1 gezeigt. Wie aus der Draufsicht in Fig. 2 zu erkennen ist, sind umlaufend um die Rutsche 4 mehrere Aufnahmefächer 12 angeordnet, wobei an jeder Seite jeweils zwei Aufnahmefächer 12 nebeneinander und übereinander vorgesehen sind.

Die Rutsche 4 ist derart dimensioniert, dass das Rutschenende 6 in den Bereich jedes Aufnahmefachs 12 gelangen kann, also beispielsweise berührend an jedes Aufnahmefach 12 heranreicht. Sofern, wie in Fig. 1 gezeigt, ein unteres Aufnahmefach 12 erreicht werden soll, wird entsprechend ein Rutschweg der Rutsche 4 durch Ausfahren des Teleskoparms 9 verlängert, während, wenn ein oberes Aufnahmefach 12 erreicht werden soll, nicht gezeigt, der Rutschweg durch Einfahren des Teleskoparms 9 verkürzt und die Rutsche zudem gegenüber der Horizontalen mit ihrem Rutschenende 6 nach oben verschwenkt wird. Derart lässt sich die durch die Transporteinrichtung 2 an den Aufnahmebehälter 1 überbrachte Sendung 3, nachdem die Transporteinrichtung 2 auf der Landeplattform 11 gelandet ist, durch den Trichter 10 hindurch über die Rutsche 4 in eines der Aufnahmefächer 12 einliefern.

Um das Einliefern zu vereinfachen, ist an der Unterseite jedes Aufnahmefachs 12 eine Positionierhilfe 13 in Form eines hin zum Aufnahmefach 12 geneigten und an diesem befestigten Bleches vorgesehen, auf welches das Rutschenende 6 abgestützt werden kann. Ferner weist jedes Aufnahmefach 12 eine der Rutsche 4 zugewandte mittels eines Rolltors verschließbare Ladeöffnung 14 auf. In analoger Weise ist an der der Ladeöffnung 14 gegenüberliegenden Seite des Aufnahmefachs 12 eine Entnahmeöffnung 15 in Form einer Paketfachtüre vorgesehen, durch die hindurch ein Empfänger der Sendung 3 diese dem Aufnahmefach 12 entnehmen kann.

Oberhalb der übereinander angeordneten Aufnahmefächer 12 ist umlaufend eine Umwehrung 16 vorgesehen, welche durch ein aufklappbares Dach 17 verschließbar ist. Im verschlossenen Zustand ist der Trichter 10 sowie die Rutsche 4 innerhalb des Aufnahmebehälters 1 vorgesehen und damit vor Witterungseinflüssen geschützt. Zudem ist eine Zutrittsbeschränkungseinrichtung 18 in Form eines Drehkreuzes für das Dach 17 des Aufnahmebehälters 1 vorgesehen, nur schematisch dargestellt, welches alternativ oder zusätzlich auch den Zutritt zu einem Gebäudedach 19, auf dem der Aufnahmebehälter 1 installiert ist, durch welche an dem Aufnahmebehälter 1 gelandeter oder sich im Anflug auf den Aufnahmebehälter 1 befindlicher Transporteinrichtung 2 ein Betreten des Daches 17 und/oder des Gebäudedaches 19 verhindert.

Ferner ist jedes Aufnahmefach 12 mit einem Belegungssensor 20 in Form einer Waage versehen, so dass prüfbar ist, ob in dem Aufnahmefach 12 eine Sendung 3 eingeliefert ist. Schließlich weist der Aufnahmebehälter 1 noch eine nur schematisch dargestellte Übergabeeinrichtung 21 in Form eines Roboterarms auf, um eine Sendung 3 aus dem Aufnahmefach 12 an eine an dem Aufnahmebehälter 1 gelandete Transporteinrichtung 2 zu übergeben.

Nach einem beispielhaften Verfahren teilt die sich im Landeanflugs befindliche Transporteinrichtung 2 dem Aufnahmebehälter 1 eine geplante Landung mit. Der Aufnahmebehälter 1 prüft daraufhin, ob ein freies Aufnahmefach 12 zum Einliefern der Sendung 3 verfügbar ist. Bejahendenfalls wird das Dach 17 des Aufnahmebehälter 1 zum Landen der Transporteinrichtung 2 an dem Aufnahmebehälter 1 geöffnet. Die Ladeöffnung 14 eines von einer Steuerung des Aufnahmebehälters 1 vorbestimmten Aufnahmefachs 12 wird geöffnet und das Rutschenende 6 wird durch Verschwenken, Drehen und/oder längenverändern der Rutsche 4 vor dem vorbestimmten Aufnahmefach 12 positioniert. In der Folge kann die Sendung 3 von dem Transporteinrichtung 2 über die Rutsche 4 in das Aufnahmefach 12 gleiten.

Durch eine Gewichtsänderung des vorbestimmten Aufnahmefachs 12 wird die Einlieferung der Sendung 3 erkannt und an einen Empfänger der Sendung 3 mitgeteilt. Nachdem sich die Transporteinrichtung 2 von dem Aufnahmebehälter 1 entfernt hat wird das Dach 17 des Aufnahmebehälters 1 wieder verschlossen. Dem Empfänger kann daraufhin in einem örtlichen Umgebungsbereich des Aufnahmebehälters 1 Zugang gewährt und die Entnahmeöffnung 15 des Aufnahmefachs 12 geöffnet werden, so dass der Empfänger in den Besitz der Sendung gelangen kann.

Die beschriebenen Ausführungsbeispiels sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**Bezugszeichenliste**

| | |
|---|---|
| Aufnahmebehälter | 1 |
| Transporteinrichtung | 2 |
| Sendung | 3 |
| Rutsche | 4 |
| Rutschenanfang | 5 |
| Rutschenende | 6 |
| Pfeil | 7 |
| Pfeil | 8 |
| Teleskoparm | 9 |
| Trichter | 10 |
| Landeplattform | 11 |
| Aufnahmefach | 12 |
| Positionierhilfe | 13 |
| Ladeöffnung | 14 |
| Entnahmeöffnung | 15 |
| Umwehrung | 16 |
| Dach | 17 |
| Zutrittsbeschränkungseinrichtung | 18 |
| Gebäudedach | 19 |
| Belegungssensor | 20 |
| Übergabeeinrichtung | 21 |

## Patentansprüche

1. Aufnahmebehälter (1) zum Vorhalten einer mittels einer unbemannten flugfähigen Transporteinrichtung (2) an den Aufnahmebehälter (1) überbrachten Sendung (3), mit
einer sich zwischen einem Rutschenanfang (5) und einen Rutschenende (6) erstreckenden Rutsche (4),
einer Mehrzahl im Bereich des Rutschenendes (6) vorgesehener Aufnahmefächer (12) zum Aufnehmen wenigstens einer Sendung (3),
einer oberhalb des Rutschenanfangs (5) vorgesehenen Landeplattform (11) für die Transporteinrichtung (2),
einem zwischen der Landeplattform (11) und dem Rutschenanfang (5) vorgesehenem Trichter (10),
einem oberhalb der Rutsche (4) und der Aufnahmefächer (12) vorgesehenem öffenbaren Dach (17) und
einer das Dach (17) umlaufenden Umwehrung (16), wobei
die Rutsche (4) um die Vertikale drehbar, um die Horizontale verschwenkbar und/oder zwischen dem Rutschenanfang (5) und dem Rutschenende (6) längenveränderbar ausgeführt ist, um eine von der Transporteinrichtung (2) an dem Rutschenanfang (5) erhaltene Sendung (3) an dem Rutschenende (6) in eines der Aufnahmefächer (12) einzuliefern, und
die Aufnahmefächer (12) derart umlaufend um die Rutsche (4) herum vorgesehen sind und die Umwehrung (16) derart ausgestaltet ist, dass bei geschlossenem Dach (17) die Rutsche (4) vollständig innerhalb des Aufnahmebehälters (1) vorgesehen ist.

2. Aufnahmebehälter (1) nach dem vorhergehenden Anspruch, wobei die Rutsche (4) um die Vertikale drehbar und um die Horizontale verschwenkbar ausgestaltet ist, die Rutsche (4) um die Horizontale verschwenkbar und längenveränderbar ausgestaltet ist, die Rutsche (4) um die Vertikale drehbar und längenveränderbar ausgestaltet ist oder die Rutsche (4) um die Vertikale drehbar, um die Horizontale verschwenkbar und längenveränderbar ausgestaltet ist.

3. Aufnahmebehälter (1) nach einem der vorhergehenden Ansprüche, wobei die Aufnahmefächer (12) auf wenigstens zwei Ebenen übereinander und/oder nebeneinander vorgesehen sind.

4. Aufnahmebehälter (1) nach einem der vorhergehenden Ansprüche, wobei jedes Aufnahmefach (12) eine verschließbare Entnahmeöffnung (15) aufweist, durch die hindurch die Sendung (3) auf dem Aufnahmefach (12) entnehmbar ist, und/oder eine der Rutsche (4) zugewandte verschließbare Ladeöffnung (14) aufweist.

5. Aufnahmebehälter (1) nach einem der vorhergehenden Ansprüche, wobei jedes Aufnahmefach (12) eine Positionierhilfe (13) zum Einliefern der Sendung (3) in das Aufnahmefach (12) und/oder zum Abtstützen des Rutschenendes (6) aufweist.

6. Aufnahmebehälter (1) nach einem der vorhergehenden Ansprüche, mit einer Zutrittsbeschränkungseinrichtung (18) für ein Dach (17) des Aufnahmebehälters (1) und/oder eines Gebäudedaches (19), auf dem der Aufnahmebehälter (1) installiert ist, welche bei an dem Aufnahmebehälter (1) gelandeter oder sich im Anflug auf den Aufnahmebehälter (1) befindlicher Transporteinrichtung (2) ein Betreten des Daches (17) und/oder des Gebäudedaches (19) verhindert.

7. Aufnahmebehälter (1) nach einem der vorhergehenden Ansprüche, mit einem Belegungssensor (20) zum Prüfen, ob in dem Aufnahmefach (12) eine Sendung (3) eingeliefert ist.

8. Aufnahmebehälter (1) nach einem der vorhergehenden Ansprüche, mit einer Übergabeeinrichtung (21) um aus dem Aufnahmefach (12) eine Sendung (3) an eine an dem Aufnahmebehälter (1) gelandete Transporteinrichtung (2) zu übergeben.

9. Verfahren zum Vorhalten einer mittels einer unbemannten flugfähigen Transporteinrichtung (2) an einen Aufnahmebehälter (1) überbrachten Sendung (3), wobei der Aufnahmebehälter (1)
eine zwischen einem Rutschenanfang (5) und einen Rutschenende (6) längenveränderbare Rutsche (4),
eine Mehrzahl im Bereich des Rutschenendes (6) vorgesehener Aufnahmefächer (12) zum Aufnehmen wenigstens einer Sendung (3),
eine oberhalb des Rutschenanfangs (5) vorgesehenen Landeplattform (11) für die Transporteinrichtung (2),
einen zwischen der Landeplattform (11) und dem Rutschenanfang (5) vorgesehenen Trichter (10),
ein oberhalb der Rutsche (4) und der Aufnahmefächer (12) vorgesehenem öffenbaren Dach (17) und
eine das Dach (17) umlaufenden Umwehrung (16) aufweist, wobei die Aufnahmefächer (12) derart umlaufend um die Rutsche (4) herum vorgesehen sind und die Umwehrung (16) derart ausgestaltet ist, dass bei geschlossenem Dach (17) die Rutsche (4) vollständig innerhalb des Aufnahmebehälters (1) vorgesehen ist, mit den Schritten:
Drehen der Rutsche (4) um die Vertikale, Verschwenken der Rutsche (4) um die Horizontale und/oder Verändern der Länge der Rutsche (4), um eine von der Transporteinrichtung (2) an dem Rutschenanfang (5) erhaltene Sendung (3) an dem Rutschenende (6) in eines der Aufnahmefächer (12) des Aufnahmebehälters (1) einzuliefern.

10. Verfahren nach dem vorhergehenden Verfahrensanspruch, mit dem Schritt:
Mitteilen eines Landeanflugs der Transporteinrichtung (2) an den Aufnahmebehälter (1),
Prüfen, ob der Aufnahmebehälter (1) über ein freies Aufnahmefach (12) zum Einliefern der Sendung (3) verfügt,
Öffnen eines Dachs (17) des Aufnahmebehälter (1) zum Landen der Transporteinrichtung (2) an dem Aufnahmebehälter (1),
Öffnen einer Ladeöffnung (14) des vorbestimmten Aufnahmefachs (12), und/oder Positionieren des Rutschenendes (6) vor dem vorbestimmten Aufnahmefach (12).

11. Verfahren nach einem der vorhergehenden Verfahrensansprüche, mit dem Schritt:
Erfassen einer Gewichtsänderung des vorbestimmten Aufnahmefachs (12), insbesondere nach Einliefern der Sendung (3),
Mitteilen des Einlieferns an einen Empfänger der Sendung (3), und/oder
Prüfen, ob sich die Transporteinrichtung (2) nach dem Einliefern der Sendung (3) von dem Aufnahmebehälter (1) entfernt hat und bejahendenfalls Schließen eines Dachs (17) des Aufnahmebehälters (1).

12. Verfahren nach einem der vorhergehenden Verfahrensansprüche, mit dem Schritt:
Prüfen, ob für einen Empfänger eine Sendung (3) in das Aufnahmefach (12) eingeliefert ist,
Bejahendenfalls, Gewährens eines Zugangs für den Empfänger in einem örtlichen Umgebungsbereich des Aufnahmebehälters (1), und
Öffnen einer Entnahmeöffnung (15) des Aufnahmefachs (12).

## Claims

1. Receiving container (1) for keeping a consignment (3) transferred to the receiving container (1) by means of an unmanned flyable transporting device (2), with
a slide (4) extending between a beginning of the slide (5) and an end of the slide (6),
a plurality of receiving compartments (12), provided in the region of the end of the slide (6), for receiving at least one consignment (3),
a landing platform (11) provided above the beginning of the slide (5) for the transporting device (2),
a funnel (10) provided between the landing platform (11) and the beginning of the slide (5),
an openable roof (17) provided above the slide (4) and the receiving compartments (12), and
a perimeter guard (16) running around the roof (17), the slide (4) being designed as rotatable about the vertical, pivotable about the horizonal and/or adjustable in length between the beginning of the slide (5) and the end of the slide (6), in order to deliver a consignment (3) obtained from the transporting device (2) at the beginning of the slide (5) into one of the receiving compartments (12) at the end of the slide (6), and
the receiving compartments (12) being provided running around the slide (4) in such a manner, and the perimeter guard (16) being configured in such a manner that, with the roof (17) closed, the slide (4) is provided completely within the receiving container (1).

2. Receiving container (1) according to the preceding claim, the slide (4) being designed as rotatable about the vertical and pivotable about the horizonal, the slide (4) being designed as pivotable about the horizontal and adjustable in length, the slide (4) being designed as rotatable about the vertical and adjustable in length or the slide (4) being designed as rotatable about the vertical, pivotable about the horizontal and adjustable in length.

3. Receiving container (1) according to one of the preceding claims, the receiving compartments (12) being provided on at least two levels, one above the other and/or next to one another.

4. Receiving container (1) according to one of the preceding claims, each receiving compartment (12) having a closable removal opening (15), through which the consignment (3) can be removed from the receiving compartment (12), and/or having a closable loading opening (14) facing the slide (4).

5. Receiving container (1) according to one of the preceding claims, each receiving compartment (12) having a positioning aid (13) for delivering the consignment (3) into the receiving compartment (12) and/or for supporting the end of the slide (6).

6. Receiving container (1) according to one of the preceding claims, with an access restricting device (18) for a roof (17) of the receiving container (1) and/or a roof of a building (19), on which the receiving container (1) is installed, which prevents any one from going onto the roof (17) and/or the roof of the building (19) when a transporting device (2) has landed on the receiving container (1) or is on an approach flight to the receiving container (1) .

7. Receiving container (1) according to one of the preceding claims, with an occupancy sensor (20) for checking whether a consignment (3) has been delivered in the receiving compartment (12).

8. Receiving container (1) according to one of the preceding claims, with a transfer device (21) to transfer a consignment (3) from the receiving compartment (12) to a transporting device (2) that has landed on the receiving container (1).

9. Method for keeping a consignment (3) transferred to a receiving container (1) by means of an unmanned flyable transporting device (2), the receiving container (1) having
a slide (4) that is adjustable in length between a beginning of the slide (5) and an end of the slide (6),
a plurality of receiving compartments (12), provided in the region of the end of the slide (6), for receiving at least one consignment (3),
a landing platform (11) provided above the beginning of the slide (5) for the transporting device (2),
a funnel (10) provided between the landing platform (11) and the beginning of the slide (5),
an openable roof (17) provided above the slide (4) and the receiving compartments (12), and
a perimeter guard (16) running around the roof (17), the receiving compartments (12) being provided running around the slide (4) in such a manner, and the perimeter guard (16) being configured in such a manner that, with the roof (17) closed, the slide (4) is provided completely within the receiving container (1) comprising the steps of:
rotating the slide (4) about the vertical, pivoting the slide (4) about the horizontal and/or changing the length of the slide (4), in order to deliver a consignment (3) obtained from the transporting device (2) at the beginning of the slide (5) into one of the receiving compartments (12) of the receiving container (1) at the end of the slide (6).

10. Method according to the preceding method claim, comprising the step of:
announcing a landing approach of the transporting device (2) to the receiving container (1),
checking whether the receiving container (1) has a free receiving compartment (12) for delivering the consignment (3),
opening a roof (17) of the receiving container (1) for the landing of the transporting device (2) on the receiving container (1),
opening a loading opening (14) of the predetermined receiving compartment (12), and/or
positioning the end of the slide (6) in front of the predetermined receiving compartment (12).

11. Method according to one of the preceding method claims, comprising the step of:
sensing a change in weight of the predetermined receiving compartment (12), in particular after delivery of the consignment (3),
announcing the delivery to a recipient of the consignment (3), and/or
checking whether the transporting device (2) has removed itself from the receiving container (1) after delivery of the consignment (3), and if so closing a roof (17) of the receiving container (1).

12. Method according to one of the preceding method claims, comprising the step of:
checking whether a consignment (3) has been delivered into the receiving compartment (12) for a recipient,
if so granting access for the recipient to a local area around the receiving container (1), and
opening a removal opening (15) of the receiving compartment (12).

## Revendications

1. Contenant de réception (1) pour tenir à disposition un envoi (3) remis au contenant de réception (1) au moyen d'un dispositif de transport aérien sans pilote (2), comprenant
une glissière (4) s'étendant entre un début de glissière (5) et une fin de glissière (6),
une pluralité de compartiments de réception (12) prévus dans la zone de la fin de glissière (6) pour recevoir au moins un envoi (3),
une plate-forme d'atterrissage (11) prévue au-dessus du début de glissière (5) pour le dispositif de transport (2),
une trémie (10) prévue entre la plate-forme d'atterrissage (11) et le début de glissière (5),
un toit ouvrant (17) prévu au-dessus de la glissière (4) et des compartiments de réception (12) et
une enceinte (16) entourant le toit (17), dans lequel
la glissière (4) est réalisée de manière à pouvoir tourner autour de la verticale, à pouvoir pivoter autour de l'horizontale et/ou à pouvoir se modifier en longueur entre le début de glissière (5) et la fin de glissière (6), afin de déposer un envoi (3) reçu à partir du dispositif de transport (2) au début de glissière (5) dans l'un des compartiments de réception (12) à la fin de glissière (6), et
les compartiments de réception (12) sont prévus de manière à entourer la glissière (4) et l'enceinte (16) est conçue de telle sorte que, lorsque le toit (17) est fermé, la glissière (4) est prévue entièrement à l'intérieur du contenant de réception (1).

2. Contenant de réception (1) selon la revendication précédente, dans lequel la glissière (4) est conçue de manière à pouvoir tourner autour de la verticale et à pouvoir pivoter autour de l'horizontale, la glissière (4) est conçue de manière à pouvoir pivoter autour de l'horizontale et à pouvoir se modifier en longueur, la glissière (4) est conçue de manière à pouvoir tourner autour de la verticale et à pouvoir se modifier en longueur ou la glissière (4) est conçue de manière à pouvoir tourner autour de la verticale, à pouvoir pivoter autour de l'horizontale et à pouvoir se modifier en longueur.

3. Contenant de réception (1) selon l'une quelconque des revendications précédentes, dans lequel les compartiments de réception (12) sont prévus sur au moins deux niveaux l'un au-dessus de l'autre et/ou l'un à côté de l'autre.

4. Contenant de réception (1) selon l'une quelconque des revendications précédentes, dans lequel chaque compartiment de réception (12) présente une ouverture de prélèvement (15) pouvant être fermée, à travers laquelle l'envoi (3) peut être prélevé du compartiment de réception (12), et/ou présente une ouverture de chargement (14) pouvant être fermée, tournée vers la glissière (4).

5. Contenant de réception (1) selon l'une quelconque des revendications précédentes, dans lequel chaque compartiment de réception (12) présente un auxiliaire de positionnement (13) pour déposer l'envoi (3) dans le compartiment de réception (12) et/ou pour supporter la fin de glissière (6).

6. Contenant de réception (1) selon l'une quelconque des revendications précédentes, comprenant un dispositif de limitation d'accès (18) pour un toit (17) du contenant de réception (1) et/ou un toit de bâtiment (19) sur lequel le contenant de réception (1) est installé, qui empêche, lorsque le dispositif de transport (2) a atterri sur le contenant de réception (1) ou se trouve en approche du contenant de réception (1), de marcher sur le toit (17) et/ou le toit de bâtiment (19).

7. Contenant de réception (1) selon l'une quelconque des revendications précédentes, comprenant un capteur d'occupation (20) pour détecter si un envoi (3) est déposé dans le compartiment de réception (12).

8. Contenant de réception (1) selon l'une quelconque des revendications précédentes, comprenant un dispositif de transfert (21) pour transférer un envoi (3) du compartiment de réception (12) à un dispositif de transport (2) qui a atterri sur le contenant de réception (1) .

9. Procédé pour tenir à disposition un envoi (3) remis à un contenant de réception (1) au moyen d'un dispositif de transport aérien sans pilote (2), dans lequel le contenant de réception (1) présente
une glissière (4) pouvant se modifier en longueur entre un début de glissière (5) et une fin de glissière (6),
une pluralité de compartiments de réception (12) prévus dans la zone de la fin de glissière (6) pour recevoir au moins un envoi (3),
une plate-forme d'atterrissage (11) prévue au-dessus du début de glissière (5) pour le dispositif de transport (2),
une trémie (10) prévue entre la plateforme d'atterrissage (11) et le début de glissière (5),
un toit ouvrant (17) prévu au-dessus de la glissière (4) et des compartiments de réception (12), et
une enceinte (16) entourant le toit (17), dans lequel
les compartiments de réception (12) sont prévus de manière à entourer la glissière (4) et l'enceinte (16) est conçue de telle sorte que, lorsque le toit (17) est fermé, la glissière (4) est prévu entièrement à l'intérieur du contenant de réception (1), comprenant les étapes suivantes :
la rotation de la glissière (4) autour de la verticale, le pivotement de la glissière (4) autour de l'horizontale et/ou la modification en longueur de la glissière (4), afin de déposer un envoi (3) reçu à partir du dispositif de transport (2) au début de glissière (5) dans l'un des compartiments de réception (12) du contenant de réception (1) à la fin de glissière (6).

10. Procédé selon la revendication de procédé précédente, comprenant l'étape suivante :
la communication au contenant de réception (1) d'une approche d'atterrissage du dispositif de transport (2),
l'évaluation de si le contenant de réception (1) dispose d'un compartiment de réception libre (12) pour déposer l'envoi (3),
l'ouverture d'un toit (17) du contenant de réception (1) pour l'atterrissage du dispositif de transport (2) sur le contenant de réception (1),
l'ouverture d'une ouverture de chargement (14) du compartiment de réception prédéterminé (12), et/ou
le positionnement de la fin de glissière (6) devant le compartiment de réception prédéterminé (12).

11. Procédé selon l'une quelconque des revendications de procédé précédentes, comprenant l'étape suivante :
la détection d'une modification de poids du compartiment de réception prédéterminé (12), notamment après le dépôt de l'envoi (3),
la communication du dépôt à un destinataire de l'envoi (3), et/ou
la détermination de si le dispositif de transport (2) s'est éloigné du contenant de réception (1) après le dépôt de l'envoi (3) et, dans l'affirmative, la fermeture d'un toit (17) du contenant de réception (1).

12. Procédé selon l'une quelconque des revendications de procédé précédentes, comprenant l'étape suivante :
la vérification de si un envoi (3) a été déposé dans le compartiment de réception (12) pour un destinataire,
dans l'affirmative, l'octroi d'un accès pour le destinataire dans une zone environnante locale du contenant de réception (1), et
l'ouverture d'une ouverture de prélèvement (15) du compartiment de réception (12).
